# EUROPEAN PATENT SPECIFICATION

(11) **EP 3 733 408 B1**
(45) Date of publication and mention of the grant of the patent: **26.01.2022**
(21) Application number: 19856437.9
(22) Date of filing: 21.05.2019
(51) Int. Cl.: B32B 27/32, B32B 27/06, B65D 30/08, B65D 13/00, B65D 65/40, B32B 7/12, B32B 27/08, B65D 65/00

(54) **RECYCLABLE POLYOLEFIN METALLIZED COMPOSITE FILM AND PREPARATION METHOD THEREFOR**
WIEDERVERWERTBARE, MIT POLYOLEFIN METALLISIERTE VERBUNDFOLIE UND VERFAHREN ZU IHRER HERSTELLUNG
FILM COMPOSITE MÉTALLISÉ DE POLYOLÉFINE RECYCLABLE ET SON PROCÉDÉ DE PRÉPARATION

(30) Priority: 05.03.2019 CN 201910163745
(43) Date of publication of application: 04.11.2020
(73) Proprietor: Nanjing Hujiang Composite Materials Co., Ltd., Nanjing, Jiangsu 211111 (CN)
(72) Inventor: ZHANG, Yujun, Nanjing, Jiangsu 211111 (CN); ZHANG, Cheng, Nanjing, Jiangsu 211111 (CN)
(74) Representative: Kayahan, Senem
(86) International application number: PCT/CN2019/087726
(87) International publication number: WO 2020/177220

(56) References cited:
- CN-A- 102 555 392
- CN-U- 207 225 990
- US-A1- 2005 069 660
- US-A1- 2018 339 498

## Description

### TECHNICAL FIELD

The present disclosure relates to the technical field of flexible packaging, and specifically to a recyclable polyolefin metallized composite film and a preparation method thereof.

### BACKGROUND

Metallized films are barrier films commonly used in the field of flexible packaging. The metallized film possesses both the properties of plastic films and metals, and is an inexpensive packaging material with an attractive appearance, excellent performance, and high practicability. Metallized films are cost-efficient and thus are mostly used in the field of metallized composite films to replace metal films (e.g. aluminum foils). Based on the metallized films, metallized composite films are formed by metallized films compounded with films of other materials to achieve the performance that single-layer metallized films cannot achieve. In general, conventional metallized composite films use cast polypropylene (CPP) aluminized films, oriented polypropylene (OPP) aluminized films or polyethylene terephthalate (PET) aluminized films as metallized film layers, which are compounded with PET films, polyamide (PA) films, polypropylene (PP) films, polyethylene (PE) films and others to form multilayer composite films. Such a composite film has a high barrier property and excellent mechanical properties. Additionally, this kind of composite film is less expensive compared to the aluminum foil composite film, and thus can replace the high barrier aluminum foil composite film to a certain degree. Metallized composite films have an excellent performance while having difficulties in recycling and environmental protection. The materials of different layers of composite film are non-uniform and thus are difficult to separate. In this regard, the recycling of composite film requires a high cost and thus is not widely adopted.

It is known that ordinary single-component metallized films can be recycled through a proper treatment. According to the recycling and treatment process of metallized films, if each layer of the composite film is compounded from different material components with good compatibility and similar properties, the composite film can be approximately regarded as a single-component metallized film and recycled according to the treatment process of ordinary single-component metallized films without considering the material difference in different layers of the composite film.

Metallized composite films are widely used in the field of flexible packaging of heavy packages. Conventional metallized composite films for heavy packages cannot be recycled as a single-component material composite film due to a large difference in the materials of different film layers and the poor compatibility thereof. Therefore, it is imperative to develop a recyclable metallized composite film suitable for the field of heavy packages.

US 2018/339498A1 a multi-layered flexible packaging comprising, in this order, a MDO HDPE layer, a barrier layer which can be a metallic layer, a print layer, an adhesive layer and a heat seal layer made of polyolefin.

US 2005/069660 A1 and CN 102 555 392 A disclose multilayer film made of different components, but they do not relate to the problem of providing a recyclable multilayer film

CN 207 225 990 U discloses a PE aluminized film, having an inner PE film, an outer PE film and an aluminium plating layer.

### SUMMARY

In view of the issues existing in the prior art, the objective of the present disclosure is to provide a recyclable polyolefin metallized composite film used in the field of heavy packages and a preparation method thereof.

The present disclosure is achieved by the following technical solutions.

A recyclable polyolefin metallized composite film includes a polyolefin metallized film layer and a polyethylene film layer. The polyolefin metallized film layer includes a polyolefin substrate film layer and a metal coating. The polyolefin substrate film layer is a three-layer composite film structure which successively includes from top to bottom a substrate film outer layer, a substrate film middle layer, and a substrate film inner layer. All of the layers have a common thickness. The lower surface of the substrate film inner layer is coated with the metal coating, and the lower surface of the metal coating is compounded with the polyethylene film layer by an adhesive.

The substrate film outer layer, the substrate film middle layer and the substrate film inner layer are co-extruded by three screw extruders through blow molding on a die head to form the polyolefin substrate film layer. The compositions of raw materials of the three layers are as follows:
substrate film outer layer 1: 20%-30% polyolefin resin A, 70%-80% polyolefin resin B;
substrate film middle layer 2: 40%-60% polyolefin resin A, 40%-60% polyolefin resin B;
substrate film inner layer 3: 20%-30% polyolefin resin A, 70%-80% polyolefin resin B;
where, the polyolefin resin A is a copolymer of propylene and a vinyl monomer; the molar content of the vinyl monomer in the copolymer is 2%-20%, the density of the polyolefin resin A is 0.86 g/cm³ -0.91 g/cm³, and the melting point of the polyolefin resin A is 135°-168°C; the polyolefin resin B is C6 metallocene polyethylene or C8 metallocene polyethylene, the density of the polyolefin resin B is 0.90 g/cm³ -0.94 g/cm³, and the melting point of the polyolefin resin B is 96°C-128°C.

Preferably, the total thickness of the polyolefin metallized composite film is 90 µm-170 µm.

Preferably, the thickness of the metal coating is 50 nm-60 nm, and the material of the metal coating is aluminum.

Preferably, the adhesive is a polyurethane adhesive.

The present disclosure further provides a method for preparing the recyclable polyolefin metallized composite film, including:
1) adding raw materials required for each layer in an outer hopper, a middle hopper and an inner hopper, respectively; uniformly mixing the raw materials; upwardly blowing the raw materials to form the polyolefin substrate film by a three-layer co-extrusion film blowing machine; actuating a corona machine to perform a corona treatment on one surface of the substrate film inner layer 3 when the three-layer co-extrusion film blowing machine is winding;
2) feeding the polyolefin substrate film prepared in step 1) into a vacuum aluminizing machine, and applying the metal coating 4 on a corona surface of the substrate film inner layer 3 to prepare the polyolefin metallized film layer;
3) compounding the polyolefin metallized film prepared in step 2) with the polyethylene film by the polyurethane adhesive on a dry laminating machine to prepare the polyolefin metallized composite film; wherein the polyolefin metallized composite film is used for making a heavy package after being cured and put aside.

Further, in step 1), the process conditions of performing the corona treatment on the substrate film inner layer 3 are as follows: the corona current is 4 A, and the substrate film inner layer 3 does not shrink within 2 seconds when coated with a liquid having the dyne value of 42.

Further, in step 2), the process conditions of vacuum aluminizing are as follows: the winding speed is 250 m/min-350 m/min; the aluminum feeding speed is 0.5 m/min-1 m/min; the vacuum degree is 3 Pa-5 Pa, and the vacuuming time is less than 20 min.

Further, in step 3), the process conditions of the dry laminating machine are as follows: the lamination speed is 120 m/min; the temperature of the first section of the drying tunnel is 40°C-50°C, the temperature of the second section of the drying tunnel is 50°C-55°C, and the temperature of the third section of the drying tunnel is 55°C-60°C; the temperature of the hot pressure roller is 60°C; the pressure of the hot pressure roller is 0.5 MPa-0.6 MPa; and the pressure of the adhesive pressure roller is 0.4 MPa-0.6 MPa.

The advantages of the present disclosure are as follows:
The barrier properties and mechanical properties of the polyolefin metallized composite film for heavy packages are commensurate with those of existing conventional metallized composite films for heavy packages. More importantly, the polyolefin metallized composite film of the present disclosure overcomes the deficiency of conventional PET films, PP films, PA films and other metallized composite films being difficult to recycle. The heavy packages made of the materials of the present disclosure enter the recycling system after being used and can be recycled according to a single plastic component metallized film, which avoids the problem of conventional metallized composite films being difficult to recycle due to non-uniform material compositions, reduces the use costs and impacts on the environment, and meets the requirements of environmental protection.

### BRIEF DESCRIPTION OF THE DRAWINGS

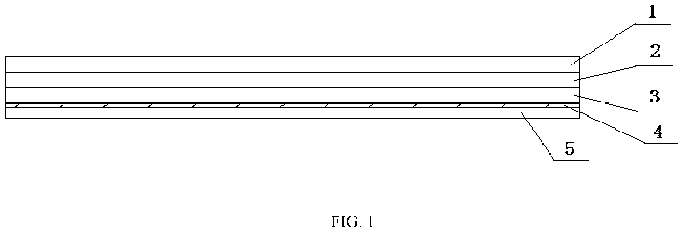

FIG. 1 is a structural schematic diagram of the polyolefin metallized composite film of the present disclosure.

Numeral references: 1-substrate film outer layer, 2-substrate film middle layer, 3-substrate film inner layer, 4-metal coating, 5-polyethylene film layer.

### DETAILED DESCRIPTION OF THE EMBODIMENTS

The invention is defined by the subject-matter of the claims.

The present disclosure will be further described hereinafter with reference to the drawings and embodiments.

As shown in FIG. 1, the recyclable polyolefin metallized composite film includes the polyolefin metallized film layer and the polyethylene film layer 5. The polyolefin metallized film layer includes the polyolefin substrate film layer and the metal coating 4. The polyolefin substrate film layer is a three-layer composite film structure which successively includes the substrate film outer layer 1, the substrate film middle layer 2, and the substrate film inner layer 3 from top to bottom. The thickness of each layer is equal. The lower surface of the substrate film inner layer 3 is coated with the metal coating 4, and the lower surface of the metal coating 4 is compounded with the polyethylene film layer 5 by an adhesive.

In the present embodiment, the substrate film outer layer, the substrate film middle layer and the substrate film inner layer are co-extruded by three screw extruders through blow molding on a die head to form the polyolefin substrate film layer, and the compositions of raw materials of the three layers are as follows:
substrate film outer layer 1: 20%-30% polyolefin resin A, 70%-80% polyolefin resin B;
substrate film middle layer 2: 40%-60% polyolefin resin A, 40%-60% polyolefin resin B;
substrate film inner layer 3: 20%-30% polyolefin resin A, 70%-80% polyolefin resin B;
where, the polyolefin resin A is a copolymer of propylene and a vinyl monomer; the molar content of the vinyl monomer in the copolymer is 2%-20%, the density of the polyolefin resin A is 0.86 g/cm3-0.91 g/cm³, and the melting point of the polyolefin resin A is 135°-168°C; the polyolefin resin B is C6 metallocene polyethylene or C8 metallocene polyethylene, the density of the polyolefin resin B is 0.90 g/cm³-0.94 g/cm³, and the melting point of the polyolefin resin B is 96°C-128°C.

In the present embodiment, the total thickness of the polyolefin metallized composite film is 90 µm-170 µm.

In the present embodiment, the thickness of the metal coating 4 is 50 nm-60 nm, and the material of the metal coating is aluminum. After the corona treatment is performed on the substrate film inner layer 3 of the substrate film of the polyolefin metallized film, the metal vapor is deposited on the surface of the substrate film inner layer by a vacuum evaporation method to form the metal coating.

In the present embodiment, the adhesive is a polyurethane adhesive, and the dry lamination is used for compounding.

### Embodiment 1

1) 100 kg of resin B and 25 kg of resin A are added to the outer hopper, 50 kg of resin B and 75 kg of resin A are added to the middle hopper, and 100 kg of resin B and 25 kg of resin A are added to the inner hopper; the resins in respective hopper are uniformly mixed and extruded by three screw extruders (having the screw diameter ϕ of 60 mm, the aspect ratio of 30, and the working temperature of 180°C-190°C); the extrudates are co-extruded and blown upwardly through a die head to form a cylindrical film; wherein the thickness ratio of the film in the outer layer, the film in the middle layer, and the film in the inner layer is 1: 1: 1; the grade of the resin A is RB707CF, and the grade of the resin B is 1018CA.
2) After the polyolefin substrate film layer is prepared, the corona treatment is performed on the substrate film inner layer 3, wherein the corona current is 4 A, and the substrate film inner layer 3 does not shrink within 2 seconds when coated with a liquid having the dyne value of 42; subsequently, the substrate film inner layer 3 is fed to a vacuum aluminizing machine and coated with the aluminum coating, wherein the winding speed is 300 m/min, the aluminum feeding speed is 0.8 m/min, the vacuum degree is 4 Pa, and the vacuuming time is less than 20 min; the surface of the substrate film inner layer 3 is coated with the metal coating 4 to prepare the polyolefin metallized film layer, wherein the thickness of the metal coating 4 is 55 nm.
3) Finally, the metal surface of the polyolefin metallized film is compounded with the polyethylene film layer 5 by a polyurethane adhesive on a dry laminating machine to prepare the polyolefin metallized composite film; wherein the polyolefin metallized composite film is used for making a heavy package after being cured and put aside; the lamination speed is 120 m/min; the temperature of the first section of the drying tunnel is 40°C, the temperature of the second section of the drying tunnel is 50°C, and the temperature of the third section of the drying tunnel is 55°C; the temperature of the hot pressure roller is 60°C; the pressure of the hot pressure roller is 0.5 MPa; and the pressure of the adhesive pressure roller is 0.4 MPa.

### Embodiment 2

1) 70 kg of resin B and 30 kg of resin A are added to the outer hopper, 60 kg of resin B and 40 kg of resin A are added to the middle hopper, and 75 kg of resin B and 25 kg of resin A are added to the inner hopper; the resins in respective hopper are uniformly mixed and extruded by three screw extruders (having the screw diameter ϕ of 60 mm, the aspect ratio of 30, and the working temperature of 180°C-190°C); the extrudates are co-extruded and blown upwardly through a die head to form a cylindrical film; wherein the thickness ratio of the film in the outer layer, the film in the middle layer, and the film in the inner layer is 1: 1: 1; the grade of the resin A is RB707CF, and the grade of the resin B is 1018CA.
2) After the polyolefin substrate film layer is prepared, the corona treatment is performed on the substrate film inner layer 3, wherein the corona current is 4 A, and the substrate film inner layer 3 does not shrink within 2 seconds when coated with the liquid having the dyne value of 42; subsequently, the substrate film inner layer 3 is fed to a vacuum aluminizing machine and coated with the aluminum coating, wherein the winding speed is 350 m/min; the aluminum feeding speed is 1 m/min; the vacuum degree is 5 Pa, and the vacuuming time is less than 20 min; the surface of the substrate film inner layer 3 is coated with the metal coating 4 to prepare the polyolefin metallized film layer, wherein the thickness of the metal coating 4 is 60 nm.
3) Finally, the metal surface of the polyolefin metallized film is compounded with the polyethylene film layer 5 by a polyurethane adhesive on a dry laminating machine to prepare the polyolefin metallized composite film; wherein the polyolefin metallized composite film is used for making a heavy package after being cured and put aside; the lamination speed is 120 m/min; the temperature of the first section of the drying tunnel is 50°C, the temperature of the second section of the drying tunnel is 55°C, and the temperature of the third section of the drying tunnel is 60°C; the temperature of the hot pressure roller is 60°C; the pressure of the hot pressure roller is 0.6 MPa; and the pressure of the adhesive pressure roller is 0.6 MPa.

## Claims

1. A recyclable polyolefin metallized composite film, wherein the recyclable polyolefin metallized composite film comprises a polyolefin metallized film layer and a polyethylene film layer (5); the polyolefin metallized film layer comprises a polyolefin substrate film layer and a metal coating (4); the polyolefin substrate film layer is a three-layer composite film structure which successively comprises a substrate film outer layer (1), a substrate film middle layer (2), and a substrate film inner layer (3) from top to bottom; films in the substrate film outer layer, the substrate film middle layer and the substrate film inner layer have an identical thickness; a lower surface of the substrate film inner layer (3) is coated with the metal coating (4), and a lower surface of the metal coating (4) is compounded with the polyethylene film layer (5) by an adhesive
**characterized in that**, the substrate film outer layer, the substrate film middle layer and the substrate film inner layer are co-extruded by three screw extruders through blow molding on a die head to form the polyolefin substrate film layer;
a raw material of the substrate film outer layer (1) is 20%-30% polyolefin resin A and 70%-80% polyolefin resin B;
a raw material of the substrate film middle layer (2) is 40%-60% polyolefin resin A and 40%-60% polyolefin resin B; and
a raw material of the substrate film inner layer 3 is 20%-30% polyolefin resin A and 70%-80% polyolefin resin B;
wherein, the polyolefin resin A is a copolymer of propylene and a vinyl monomer; a molar content of the vinyl monomer in the copolymer is 2%-20%, a density of the polyolefin resin A is 0.86 g/cm³-0.91 g/cm³, and a melting point of the polyolefin resin A is 135°C-168°C; the polyolefin resin B is C6 metallocene polyethylene or C8 metallocene polyethylene, a density of the polyolefin resin B is 0.90 g/cm³-0.94 g/cm³ and a melting point of the polyolefin resin B is 96°C-128°C.

2. The recyclable polyolefin metallized composite film according to claim 12, **characterized in that**, a total thickness of the recyclable polyolefin metallized composite film is 90 µm-170 µm.

3. The recyclable polyolefin metallized composite film according to claim 1, **characterized in that**, a thickness of the metal coating (4) is 50 nm-60 nm, and a material of the metal coating is aluminum.

4. The recyclable polyolefin metallized composite film according to claim 1, **characterized in that**, the adhesive is a polyurethane adhesive.

5. A method for preparing the recyclable polyolefin metallized composite film according to claim 1, **characterized in that**, the method comprises:
1) adding raw materials of the substrate film outer layer in an outer hopper, adding raw materials of the substrate film middle layer in a middle hopper, and adding raw materials of the substrate film inner layer in an inner hopper; uniformly mixing the raw materials in respective hopper; upwardly blowing the raw materials to form the polyolefin substrate film layer by a three-layer co-extrusion film blowing machine; actuating a corona machine to perform a corona treatment on one surface of the substrate film inner layer (3) when the three-layer co-extrusion film blowing machine is winding;
2) feeding the polyolefin substrate film layer prepared in the step 1) into a vacuum aluminizing machine, and applying the metal coating (4) on a corona surface of the substrate film inner layer (3) to prepare the polyolefin metallized film layer; and
3) compounding the polyolefin metallized film layer prepared in the step 2) with the polyethylene film layer by a polyurethane adhesive on a dry laminating machine to prepare the recyclable polyolefin metallized composite film; wherein the recyclable polyolefin metallized composite film is configured to make a heavy package after being cured and put aside.

6. The method for preparing the recyclable polyolefin metallized composite film according to claim 5, **characterized in that**, in the step 1), process conditions of performing the corona treatment on the substrate film inner layer (3) comprise: a corona current of the corona treatment is 4 A, and the substrate film inner layer does not shrink within 2 seconds when coated with a liquid having a dyne value of 42.

7. The method for preparing the recyclable polyolefin metallized composite film according to claim 5, **characterized in that**, in the step 2), process conditions of applying the metal coating on the corona surface of the substrate film inner layer comprise: a winding speed is 250 m/min-350 m/min, an aluminum feeding speed is 0.5 m/min-1 m/min, a vacuum degree is 3 Pa-5 Pa, and a vacuuming time is less than 20 min.

8. The method for preparing the recyclable polyolefin metallized composite film according to claim 5, **characterized in that**, in the step 3), process conditions of the dry laminating machine comprise: a lamination speed of the dry laminating machine is 120 m/min; a temperature of a first section of a drying tunnel of the dry laminating machine is 40°C-50°C, a temperature of a second section of the drying tunnel is 50°C-55°C, and a temperature of a third section of the drying tunnel is 55°C-60°C; a temperature of a hot pressure roller of the dry laminating machine is 60°C; a pressure of the hot pressure roller is 0.5 MPa-0.6 MPa; a pressure of the adhesive pressure roller of the dry laminating machine is 0.4 MPa-0.6 MPa.

## Patentansprüche

1. Eine wiederverwertbare, mit Polyolefin metallisierte Verbundfolie, wobei die wiederverwertbare, mit Polyolefin metallisierte Verbundfolie eine mit Polyolefin metallisierte Verbundfolie und eine Polyethylen-Folienschicht (5) umfasst; die metallisierte Polyolefin-Folienschicht eine Polyolefin-Substrat-Folienschicht und eine Metallbeschichtung (4) umfasst; die Polyolefin-Substrat-Folienschicht eine dreischichtige Verbundfolienstruktur ist, die von oben nach unten nacheinander eine Substratfolien-Außenschicht (1), eine Substratfolien-Mittelschicht (2) und eine Substratfolien-Innenschicht (3) umfasst; Filme in der Substratfolien-Außenschicht, der Substratfolien-Mittelschicht und der Substratfolien-Innenschicht eine identische Dicke aufweisen; eine untere Oberfläche der Substratfolien-Innenschicht (3) mit der Metallbeschichtung (4) beschichtet ist, und eine untere Oberfläche der Metallbeschichtung (4) mit der Polyethylenfilmschicht (5) durch einen Klebstoff verbunden ist
**dadurch gekennzeichnet ist, dass** die Substratfolien-Außenschicht, die Substratfolien-Mittelschicht und die Substratfolien-Innenschicht mit Hilfe von Drei-Schnecken-Extrudern durch Blasformen an einem Düsenkopf coextrudiert werden, um die Polyolefin-Substratfolienschicht zu bilden;
das Rohmaterial der Substratfolien-Außenschicht (1) besteht aus 20%-30% Polyolefinharz A und 70%-80% Polyolefinharz B;
das Rohmaterial der Substratfolien-Mittelschicht (2) besteht zu 40%-60% aus Polyolefinharz A und zu 40%-60% aus Polyolefinharz B; und
das Rohmaterial der Substratfolien-Innenschicht (3) besteht aus 20%-30% Polyolefinharz A und 70%-80% Polyolefinharz B;
wobei das Polyolefinharz A ein Copolymer aus Propylen und einem Vinylmonomer ist; der molare Gehalt des Vinylmonomers in dem Copolymer 2%-20% beträgt, die Dichte des Polyolefinharzes A 0.86 g/cm3-0. 91 g/cm3, und der Schmelzpunkt des Polyolefinharzes A 135°C-168°C beträgt; das Polyolefinharz B ist C6-Metallocenpolyethylen oder C8-Metallocenpolyethylen, die Dichte des Polyolefinharzes B beträgt 0,90 g/cm3-0,94 g/cm3 und der Schmelzpunkt des Polyolefinharzes B beträgt 96°C-128°C.

2. Die wiederverwertbare, mit Polyolefin metallisierte Verbundfolie nach Anspruch 12, **dadurch gekennzeichnet, dass** die Gesamtdicke der wiederverwertbaren, mit Polyolefin metallisierten Verbundfolie 90 urn-170 µn beträgt.

3. Die wiederverwertbare, mit Polyolefin metallisierte Verbundfolie nach Anspruch 1, **dadurch gekennzeichnet, dass** die Metallbeschichtung (4) eine Dicke von 50 nm bis 60 nm aufweist und das Material der Metallbeschichtung Aluminium ist.

4. Die wiederverwertbare, mit Polyolefin metallisierte Verbundfolie nach Anspruch 1, **dadurch gekennzeichnet, dass** der Klebstoff ein Polyurethan-Klebstoff ist.

5. Ein Verfahren zur Herstellung der wiederverwertbaren, **mit Polyolefin** metallisierten Verbundfolie nach Anspruch 1, **dadurch gekennzeichnet, dass** das Verfahren umfasst:
1) Zugabe von Rohstoffen der äußeren Schicht der Substratfolie in einen äußeren Trichter, Zugabe von Rohstoffen der mittleren Schicht der Substratfolie in einen mittleren Trichter und Zugabe von Rohstoffen der inneren Schicht der Substratfolie in einen inneren Trichter; gleichmäßiges Mischen der Rohstoffe in den jeweiligen Trichtern; Aufwärtsblasen der Rohstoffe zur Bildung der Polyolefin-Substratfolienschicht durch eine Dreischicht-Coextrusionsfolienblasmaschine; Betätigen einer Coronamaschine zur Durchführung einer Coronabehandlung auf einer Oberfläche der Substratfolien-Innenschicht (3), wenn die Dreischicht-Coextrusionsfolienblasmaschine gewickelt wird;
2) Zuführen der in Schritt 1) hergestellten Polyolefinsubstratfolienschicht in eine Vakuumaluminierungsmaschine und Aufbringen der Metallbeschichtung (4) auf eine Koronaoberfläche der Substratfolien-Innenschicht (3), um die metallisierte Polyolefinfolienschicht herzustellen; und
3) Verbinden der in Schritt 2) hergestellten metallisierten Polyolefin-Folienschicht mit der Polyethylen-Folienschicht durch einen Polyurethan-Klebstoff in einer Trockenlaminiermaschine, um die wiederverwertbare, mit Polyolefin metallisierte Verbundfolie herzustellen; wobei die wiederverwertbare, mit Polyolefin metallisierte Verbundfolie so konfiguriert ist, dass sie nach dem Aushärten und Ablegen eine schwere Verpackung bildet.

6. Das Verfahren zur Herstellung der wiederverwendbaren, **mit Polyolefin** metallisierten Verbundfolie nach Anspruch 5, **dadurch gekennzeichnet, dass** im Schritt 1) die Verfahrensbedingungen für die Durchführung der Koronabehandlung an der Substratfolien-Innenschicht (3) umfassen: ein Koronastrom der Koronabehandlung beträgt 4 A, und die Substratfolien-Innenschicht schrumpft nicht innerhalb von 2 Sekunden, wenn sie mit einer Flüssigkeit mit einem Dyne-Wert von 42 beschichtet wird.

7. Das Verfahren zur Herstellung der wiederverwertbaren, **mit Polyolefin** metallisierten Verbundfolie nach Anspruch 5, **dadurch gekennzeichnet, dass** in Schritt 2) die Verfahrensbedingungen für das Aufbringen der Metallbeschichtung auf die KoronaOberfläche der inneren Schicht der Substratfolie Folgendes umfassen: eine Wickelgeschwindigkeit von 250 m/min bis 350 m/min, eine Aluminiumzuführungsgeschwindigkeit von 0,5 m/min bis 1 m/min, einen Vakuumgrad von 3 Pa bis 5 Pa und eine Vakuumierungszeit von weniger als 20 Minuten.

8. Das Verfahren zur Herstellung der wiederverwertbaren, **mit Polyolefin** metallisierten Verbundfolie nach Anspruch 5, **dadurch gekennzeichnet, dass** im Schritt 3) die Prozessbedingungen der Trockenlaminiermaschine umfassen: eine Laminiergeschwindigkeit der Trockenlaminiermaschine 120 m/min beträgt; eine Temperatur eines ersten Abschnitts eines Trockentunnels der Trockenlaminiermaschine 40°C-50°C beträgt, eine Temperatur eines zweiten Abschnitts des Trockentunnels 50°C-55°C beträgt und eine Temperatur eines dritten Abschnitts des Trockentunnels 55°C-60°C beträgt; eine Temperatur einer Heißdruckwalze der Trockenlaminiermaschine 60°C beträgt; ein Druck der Heißdruckwalze 0. 5 MPa-0,6 MPa; ein Druck der Klebedruckwalze der Trockenlaminiermaschine beträgt 0,4 MPa-0,6 MPa.

## Revendications

1. Film composite métallisé recyclable de polyoléfine, dans lequel le film composite métallisé recyclable de polyoléfine comprend une couche de film métallisé de polyoléfine et une couche de film de polyéthylène (5) ; la couche de film métallisé recyclable de polyoléfine comprend une couche de film de substrat de polyoléfine et un revêtement métallique (4) ; la couche de film de substrat de polyoléfine est une structure de film composite à trois couches qui comprend successivement une couche extérieure de film de substrat (1), une couche intermédiaire de film de substrat (2) et une couche intérieure de film de substrat (3) de haut en bas ; les films dans la couche extérieure de film de substrat, la couche intermédiaire de film de substrat et la couche intérieure de film de substrat ont une épaisseur identique ; une surface inférieure de la couche intérieure de film de substrat (3) est revêtue du revêtement métallique (4), et une surface inférieure du revêtement métallique (4) est composée avec la couche de film de polyéthylène (5) par un adhésif
**caractérisé en ce que**, la couche extérieure de film de substrat, la couche intermédiaire de film de substrat et la couche intérieure de film de substrat sont co-extrudés par des extrudeuses à trois vis via moulage par soufflage sur une tête de filière pour former la couche de film de substrat de polyoléfine ;
une matière première de la couche extérieure de film de substrat (1) est de 20 % - 30 % de résine polyoléfine A et de 70 % - 80 % de résine polyoléfine B ;
une matière première de la couche intermédiaire de film de substrat (2) est de 40 % - 60 % de résine polyoléfine A et de 40 % - 60 % de résine polyoléfine B ; et
une matière première de la couche intérieure de film de substrat (3) est de 20 % - 30 % de résine polyoléfine A et de 70 % - 80 % de résine polyoléfine B ;
dans lequel, la résine polyoléfine A est un copolymère de propylène et d'un monomère vinylique ; une teneur molaire du monomère vinylique dans le copolymère est de 2 % - 20 %, une densité de la résine polyoléfine A est de 0.86 g/cm³ - 0.91 g/cm³, et un point de fusion de la résine polyoléfine A est de 135°C - 168°C ; la résine polyoléfine B est un polyéthylène métallocène C6 ou un polyéthylène métallocène C8, la densité de la résine polyoléfine B est de 0.90 g/cm³-0.94 g/cm³ et le point de fusion de la résine polyoléfine B est de 96°C-128°C.

2. Film composite métallisé recyclable de polyoléfine selon la revendication 1, **caractérisé en ce que**, l'épaisseur totale de film composite métallisé recyclable de polyoléfine est de 90 µm-170 µm.

3. Film composite métallisé recyclable de polyoléfine selon la revendication 1, **caractérisé en ce que**, une épaisseur du revêtement métallique (4) est de 50 nm-60 nm, et un matériau du revêtement métallique est l'aluminium.

4. Film composite métallisé recyclable de polyoléfine selon la revendication 1, **caractérisé en ce que**, l'adhésif est un adhésif de polyuréthane.

5. Procédé de préparation de film composite métallisé recyclable de polyoléfine selon la revendication 1, **caractérisé en ce que**, le procédé comprend:
1) ajouter des matières premières de la couche extérieure de film de substrat dans une trémie extérieure, ajouter des matières premières de la couche intermédiaire de film de substrat dans une trémie intermédiaire, et ajouter des matières premières de la couche intérieure de film de substrat dans une trémie intérieure ; mélanger uniformément les matières premières dans la trémie respective ; souffler les matières premières vers le haut pour former la couche de film de substrat de polyoléfine par une machine de soufflage de film de co-extrusion à trois couches ; actionner une machine corona pour effectuer un traitement corona sur une surface de la couche intérieure de film de substrat (3) lorsque la machine de soufflage de film de co-extrusion à trois couches est en cours d'enroulement ;
2) alimenter la couche de film de substrat de polyoléfine préparée à l'étape 1) dans une machine d'aluminisation sous vide, et appliquer le revêtement métallique (4) sur une surface corona de la couche intérieure de film de substrat (3) pour préparer la couche de film métallisé de polyoléfine ; et
3) composer la couche de film métallisé de polyoléfine préparée à l'étape 2) avec la couche de film de polyéthylène au moyen d'un adhésif de polyuréthane sur une machine de laminage à sec pour préparer le film composite métallisé recyclable de polyoléfine ; dans lequel le film composite métallisé recyclable de polyoléfine est configuré pour former un emballage lourd après avoir été durci et mis de côté.

6. Procédé de préparation de film composite métallisé recyclable de polyoléfine selon la revendication 5, **caractérisé en ce que**, dans l'étape 1), les conditions du processus de réalisation du traitement corona sur la couche intérieure de film de substrat (3) comprennent : un courant corona du traitement corona est de 4 A, et la couche intérieure de film de substrat ne rétrécit pas dans les 2 secondes lorsqu'elle est revêtue d'un liquide ayant une valeur dyne de 42.

7. Procédé de préparation de film composite métallisé recyclable de polyoléfine selon la revendication 5, **caractérisé en ce que**, dans l'étape 2), les conditions du processus d'application du revêtement métallique sur la surface corona de la couche intérieure de film de substrat comprennent : une vitesse d'enroulement est de 250 m/min-350 m/min, une vitesse d'alimentation en aluminium est de 0.5 m/min-1 m/min, un degré de vide est de 3 Pa-5 Pa, et un temps de mise sous vide est inférieur à 20 min.

8. Procédé de préparation de film composite métallisé recyclable de polyoléfine selon la revendication 5, **caractérisé en ce que**, dans l'étape 3), les conditions du processus de la machine de laminage à sec comprennent : la vitesse de lamination de la machine de laminage à sec est de 120 m/min ; une température d'une première section d'un tunnel de séchage de la machine de laminage à sec est de 40°C-50°C, une température d'une deuxième section du tunnel de séchage est de 50°C-55°C, et une température d'une troisième section du tunnel de séchage est de 55°C-60°C ; une température d'un rouleau de pression chaud de la machine de laminage à sec est de 60°C ; une pression du rouleau de pression chaud est de 0.5 MPa-0.6 MPa ; la pression du rouleau de pression de l'adhésif de la machine de laminage à sec est de 0.4 MPa-0.6 MPa.
